# DEMANDE DE BREVET EUROPEEN

(11) **EP 4 512 533 A1**
(43) Date de publication de la demande: **26.02.2025**
(21) Numéro de dépôt: 24194252.3
(22) Date de dépôt: 13.08.2024
(51) Int. Cl.: B05B 3/10

(54) **PULVÉRISATEUR ROTATIF COMPRENANT BOL ROTATIF ET DES MOYENS DE COUPLAGE MAGNÉTIQUE, ET PROCÉDÉ DE MONTAGE ET/OU DE DÉMONTAGE D'UN TEL PULVÉRISATEUR**

(30) Priorité: 14.08.2023 FR 2308701
(71) Demandeur: Exel Industries, 51200 Epernay (FR)
(72) Inventeur: VANZETTO, Denis, 51200 EPERNAY (FR); PERINET, Sylvain, 51200 EPERNAY (FR); MEDARD, Cyrille, 51200 EPERNAY (FR)
(74) Mandataire: Lavoix

(57) **Abrégé**

La présente invention concerne un pulvérisateur rotatif de produit de revêtement (2) comprenant un corps principal (4) et un bol (8) entraîné en rotation par un organe tournant (10), autour d'un axe de rotation (A2) défini par le corps principal. Le bol est équipé de premiers moyens (82) de couplage magnétique aptes à coopérer avec des seconds moyens (14) de couplage magnétique complémentaires fixés sur une partie non rotative (6) du pulvérisateur (2). Les premiers et seconds moyens de couplage sont aptes à exercer un effort au moins partiellement axial par rapport à l'axe de rotation (A2) du bol (8), cet effort induisant le couplage en rotation du bol avec l'organe tournant. Les seconds moyens de couplage magnétique (14) sont portés par une jupe d'amenée d'air (6) rapportée sur le corps principal (4).

## Description

La présente invention concerne un pulvérisateur rotatif de produit de revêtement comprenant un corps principal et un bol entrainé en rotation autour d'un axe de rotation défini par le corps principal. La présente invention concerne également un procédé de montage et/ou de démontage d'un pulvérisateur de ce type.

Il est connu de WO2005/082542A1 de monter un bol sur un pulvérisateur rotatif en associant des premiers et seconds moyens de couplage magnétique fixés respectivement sur le bol et sur une partie non rotative du pulvérisateur, ce qui permet d'exercer un effort globalement axial, de nature à induire un couplage en rotation du bol et d'un organe d'entrainement, tel que le rotor d'une turbine ou un arbre entrainé par un tel rotor. Ce matériel donne globalement satisfaction.

D'autre part, il est connu d'équiper un pulvérisateur rotatif avec une jupe d'amenée d'air qui permet de distribuer, à proximité du bol, un flux d'air de guidage ou de conformation d'un nuage de gouttelettes de produit de revêtement quittant l'arête du bol. Les seconds moyens de couplage magnétique sont alors souvent disposés sur une partie centrale d'un corps principal du pulvérisateur, en regard d'une ouverture centrale de la jupe d'amenée d'air dans laquelle est engagée le bol pour coopérer avec ces moyens d'entraînement en rotation. Dans ce cas, la jupe d'amenée d'air doit être montée sur le corps principal avant mise en place du bol qui doit être précisément positionné, à la main, en face des seconds moyens de couplage magnétique. A l'inverse, lors d'une opération de maintenance, le bol doit être séparé du corps principal, puis la jupe doit être séparée de ce corps, lors de deux opérations manuelles successives, délicates à réaliser dans un environnement peu propice aux manipulations, telle qu'une cabine de peinturage.

En outre, dans certaines applications, le bol est de taille relativement modeste, au point que sa prise en main est délicate, ce qui induit un risque de l'échapper lorsqu'on le manipule à la main. En particulier lors du démontage du bol et de la jupe d'amenée d'air, si l'opérateur agit sur la jupe avant d'avoir retiré le bol, il a de fortes chances de faire tomber le bol, dont l'arête sera alors probablement endommagée.

Avec ces matériels, le montage et le démontage du bol et de la jupe d'amenée d'air sont des opérations complexes, difficilement automatisables.

C'est à ces inconvénients qu'entend plus particulièrement remédier l'invention en proposant un nouveau pulvérisateur rotatif de produit de revêtement dans lequel le montage d'une jupe d'amenée d'air et d'un bol sur un corps principal est facilité, ce montage pouvant, dans une large mesure, être automatisé.

À cet effet, l'invention a pour objet un pulvérisateur rotatif de produit de revêtement comprenant un corps principal et un bol entraîné en rotation par un organe tournant, autour d'un axe de rotation défini par le corps principal, le bol étant équipé de premiers moyens de couplage magnétique aptes à coopérer avec des seconds moyens de couplage magnétique complémentaires fixés sur une partie non rotative du pulvérisateur de produit de revêtement, les premiers et seconds moyens de couplage étant aptes à exercer un effort au moins partiellement axial par rapport à l'axe de rotation du bol, cet effort induisant le couplage en rotation du bol avec l'organe tournant, caractérisé en ce que les seconds moyens de couplage magnétique sont portés par une jupe d'amenée d'air rapportée sur le corps principal.

Grâce à l'invention, les premiers et seconds moyens de couplage magnétique permettent d'assembler la jupe d'amenée d'air et le bol sous la forme d'un sous-ensemble qui peut être manipulé de façon unitaire lors de son montage sur le corps principal, ou de son démontage. Ce sous-ensemble est de taille supérieure à celle du bol seul, donc plus facile à prendre en main. Il risque moins d'être échappé. En outre, comme les premiers et seconds moyens de couplage positionnent correctement le bol par rapport à la jupe d'amenée d'air, le fait de monter correctement cette jupe sur le corps principal garantit un bon positionnement du bol par rapport à ce corps, donc par rapport à l'organe tournant qui entraîne le bol en rotation.

Selon des aspects avantageux mais non obligatoires de l'invention, un tel pulvérisateur peut incorporer une ou plusieurs des caractéristiques suivantes prise(s) selon toute combinaison techniquement admissible.
- Les seconds moyens de couplage magnétique sont montés sur, ou formés par, une collerette interne de la jupe d'amenée d'air, en appui sur une face avant du corps principal.
- Les premiers moyens de couplage magnétique sont formés par une partie ferromagnétique du bol et les seconds moyens de couplage magnétique sont formés par au moins un aimant permanent.
- Les premiers moyens de couplage magnétique sont formés par au moins un aimant permanent et les seconds moyens de couplage magnétique sont formés par une partie ferromagnétique de la jupe d'amenée d'air.
   - Le pulvérisateur comprend un système magnéto-pneumatique ou magnéto-hydraulique qui inclut
      - un dispositif magnétique d'accrochage de la jupe d'amenée d'air sur le corps principal ; et
      - un mécanisme pneumatique ou hydraulique de verrouillage et de serrage de la jupe d'amenée d'air sur le corps principal.
- Le dispositif magnétique d'accrochage est configuré pour exercer, entre la jupe d'amenée d'air et le corps principal, un effort magnétique axial, parallèle à un axe longitudinal du pulvérisateur, avec une première intensité, alors que le mécanisme pneumatique ou hydraulique de serrage est configuré pour exercer entre la jupe d'amenée d'air et le corps principal un effort mécanique axial, parallèle à l'axe longitudinal du pulvérisateur, avec une deuxième intensité et alors que la deuxième intensité est strictement supérieure à la première intensité.
- Le pulvérisateur comprend des joints d'étanchéité disposés entre la jupe d'amenée d'air et le corps principal et les joints d'étanchéité comprimés par l'effort mécanique exercé par le mécanisme pneumatique ou hydraulique de serrage isolent des conduits de circulation d'air de conformation vis-à-vis de l'extérieur du pulvérisateur.
- La jupe d'amenée d'air est pourvue de reliefs de vissage sur des reliefs complémentaires ménagés sur le corps principal.
- La jupe d'amenée d'air est bridée sur le corps principal par un effort magnétique exercé entre une partie du corps principal et une partie de la jupe d'amenée d'air.

Selon un deuxième aspect, l'invention a pour objet un procédé de montage et/ou de démontage d'un pulvérisateur de produit de revêtement tel que mentionné ci-dessus, dans lequel
- lors du montage du pulvérisateur,
   - dans une première étape de montage, la jupe d'amenée d'air et le bol sont assemblés et maintenus ensemble par un effort magnétique entre les premiers et deuxièmes moyens de couplage magnétique ;
   - dans une deuxième étape de montage, un sous-ensemble formé de la jupe d'amenée d'air et le bol est rapporté en une opération sur le corps principal ;
- lors du démontage du pulvérisateur,
   - dans une première étape de démontage, le sous-ensemble formé de la jupe d'amenée d'air et du bol est séparé du corps principal en une opération ; et
   - dans une deuxième étape de démontage, la jupe d'amenée d'air et le bol sont séparés l'un de l'autre, à l'encontre de l'effort magnétique entre les premiers et deuxièmes moyens de couplage magnétique.

L'invention apparaitra plus clairement à la lecture de la description qui va suivre, donnée uniquement à titre d'exemple non limitatif et faite en référence aux dessins annexés dans lesquels :
- [Fig.1] La figure 1 est une coupe longitudinale partiellement éclatée d'un pulvérisateur conforme à un premier mode de réalisation de l'invention ;
- [Fig.2] La figure 2 est une coupe longitudinale en perspective éclatée d'un système magnéto-pneumatique appartenant au pulvérisateur de la figure 1 ;
- [Fig.3] La figure 3 représente, sur deux inserts A) et B), le pulvérisateur de la figure 1 lors d'une première sous-étape de montage sur un corps principal d'un sous-ensemble comprenant une jupe d'amenée d'air et d'un bol, l'insert B) étant une vue à plus grande échelle du détail B sur l'insert A) ;
- [Fig.4] La figure 4 est une vue analogue à la figure 3, lors d'une deuxième sous-étape du procédé de montage ;
- [Fig.5] La figure 5 est une vue analogue à la figure 3, lors d'une troisième sous-étape du procédé de montage ;
- [Fig.6] La figure 6 est une vue analogue à la figure 3, lors d'une quatrième sous-étape du procédé de montage ;
- [Fig.7] La figure 7 est une coupe analogue à la figure 1, pour un pulvérisateur conforme à un deuxième mode de réalisation de l'invention ;
- [Fig.8] La figure 8 est une coupe analogue à la figure 1, pour un pulvérisateur conforme à un troisième mode de réalisation de l'invention ; et
- [Fig.9] La figure 9 est une coupe analogue à la figure 1, pour un pulvérisateur conforme à un quatrième mode de réalisation de l'invention.

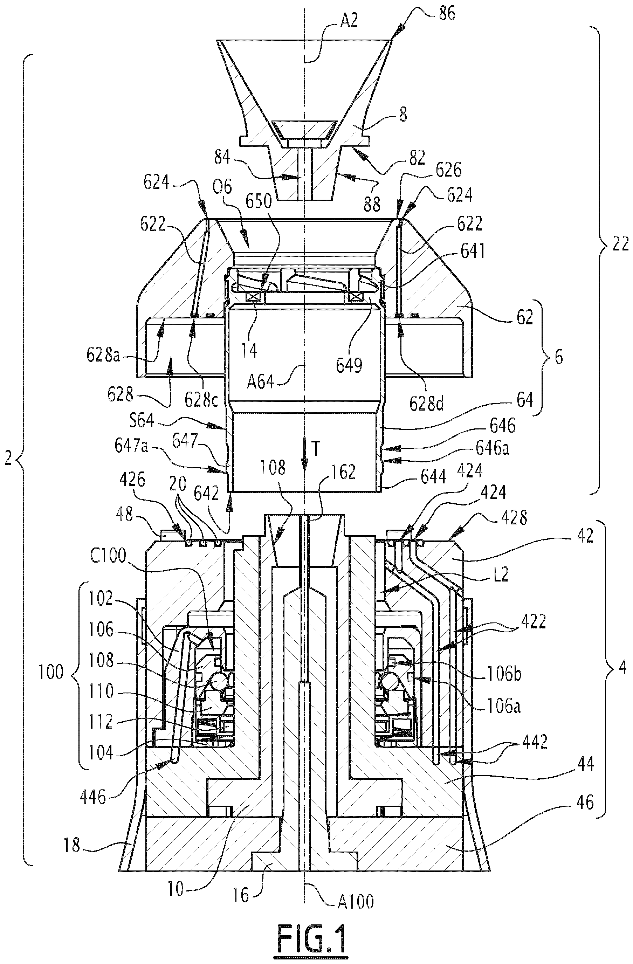

Le pulvérisateur de produit de revêtement 2 représenté sur les figures 1 à 6 comprend un corps principal 4 formé par l'assemblage d'une partie externe 42, d'une partie interne 44 et d'une embase 46.

Par exemple, le produit de revêtement est une peinture liquide, un apprêt ou un vernis destiné à être appliqué sur une carrosserie ou un composant de véhicule automobile.

Des vis 48 solidarisent les parties 42, 44 et 46 du corps principal. Ces vis 48 dépassent par rapport à une face avant 428 de la partie externe 42.

Le pulvérisateur 2 est de type électrostatique à charge interne et comprend une unité haute-tension non-représentée, configurée pour porter à un potentiel électrique donné le produit de revêtement pulvérisé par le pulvérisateur 2.

On note A2 un axe longitudinal du pulvérisateur 2.

On définit un côté avant du pulvérisateur 2 ou d'un composant de ce pulvérisateur comme un côté tourné vers une pièce à revêtir, en cours d'utilisation du pulvérisateur 2, et un côté arrière comme un côté tourné à l'opposé du côté avant. Sur les figures, l'avant du pulvérisateur 2 est tourné vers le haut et l'arrière est tourné vers le bas.

Une jupe d'amenée d'air 6 est montée sur le corps principal 4 en configuration assemblée du pulvérisateur 2. Cette jupe d'amenée d'air 6 comprend un corps de jupe 62 et un manchon 64 vissé sur le corps de jupe 62.

En variante, le corps de jupe 62 et le manchon sont solidarisé par sertissage, soudage et/ou collage.

La solidarisation entre le corps de jupe 62 et le manchon 64 a lieu au niveau d'une extrémité avant 641 du manchon.

Le manchon 64 est réalisé dans un matériau ferromagnétique, par exemple en acier.

Un bol de pulvérisation 8 appartient également au pulvérisateur 2 et est destiné à être entrainé en rotation, autour de l'axe longitudinal A2, par une turbine dont on note 10 le rotor 10. Le stator de la turbine est constitué par la partie interne 44 du corps principal 4.

Le bol 8 définit une surface tronconique mâle 88, convergente vers l'arrière, alors que le rotor 10 définit une surface tronconique femelle 108, divergente vers l'avant et globalement complémentaire de la surface tronconique mâle 88.

Un aimant annulaire 14 est porté par une collerette radiale interne 649 de la jupe d'amenée d'air 6. Plus précisément, l'aimant 14 est disposé dans une gorge 650 ménagée dans la collerette radiale interne 649 et orientée vers l'avant de la jupe d'amenée d'air 6.

En configuration montée du bol 8 sur la jupe d'amenée d'air 6, et avant montage de la jupe d'amenée d'air sur le corps principal 4, une surface annulaire 82 du bol 8, qui est réalisé dans un matériau ferromagnétique, vient en regard de l'aimant permanent 14, ce qui a pour effet de solidariser ensemble les pièces 6 et 8 qui constituent alors un sous-ensemble 22, unitaire et aisé à manipuler lors de sa mise en place sur le pulvérisateur 2 ou lors de son retrait.

En variante, et comme représenté pour le troisième mode de réalisation, seule une partie du bol 8 qui définit la surface annulaire 82 est réalisée en matériau ferromagnétique, par exemple sous la forme d'une bague en acier rapportée sur le bol 8 qui est, par exemple, en aluminium.

La partie ferromagnétique du bol, qui définit la surface 82, forme des premiers moyens de couplage magnétique. L'aimant 14 forme des seconds moyens de couplage magnétique. Lorsque la jupe d'amenée d'air 6 équipée du bol 8 est montée et immobilisée sur le corps principal 4, les premier et second moyens de couplage magnétique 82 et 22 coopèrent afin de plaquer la surface 88 du bol 8 contre la surface 108 du rotor 10, ce qui solidarise le bol et le rotor en rotation autour de l'axe de rotation A2.

Le pulvérisateur 2 comprend également un injecteur 16 de produit de revêtement dont l'extrémité aval 162 pénètre dans un alésage central 84 du bol 8, en configuration montée de ce bol sur le rotor de turbine 10.

Un capot 18 est monté autour du corps principal 4 et protège celui-ci contre les projections de produit de revêtement.

Le corps de jupe 62 est équipé de plusieurs canaux 622 qui le traversent de part en part, selon une direction parallèle à l'axe longitudinal A2 en configuration montée de la jupe d'amenée d'air 6 sur le corps principal 4, et qui alimentent chacun un orifice de sortie 624 par lequel des jets d'air peuvent être dirigés vers un nuage de produit de revêtement quittant une arête 86 du bol 8, afin de conformer ce jet de produit de revêtement et/ou de le diriger vers un objet à revêtir. Les orifices 624 sont ménagés sur une face avant circulaire 626 du corps de jupe 62.

Le corps de jupe 62 définit un logement en creux 628 dans lequel est reçue une portion avant de la partie externe 42 du corps principal 4 en configuration montée de la jupe d'amenée d'air 6 sur le corps principal 4. Le logement en creux 628 est ménagé sur l'arrière du corps de jupe 62.

La partie externe 42 du corps principal 40 comprend des conduits 422 d'acheminement d'air vers la jupe d'amenée d'air 6. Ces canaux 422 sont alimentés en air par des canaux 442 qui s'étendent pour l'essentiel dans un plan différent de celui des figures 1 et 3 à 6 et dont seules les extrémités aval sont visibles sur ces figures.

Le fond 628a du logement en creux 628 est équipé de deux gorges annulaires 628c et 628d qui servent de distributeurs pour alimenter deux groupes de conduits 622 à partir des débouchés 424 des conduits 422. Pour assurer l'étanchéité au passage de l'air entre les conduits 422 et les gorges 628c et 628d, des joints toriques 20 sont disposés dans des gorges annulaires 426 ménagées sur la face avant 428 de la partie externe 42 du corps principal 4, c'est-à-dire dans une zone d'interface entre le corps principal 4 et la jupe 6. Ces joints toriques 20 sont destinés à venir en appui contre le fond 628a du logement en creux 628 et à être comprimés.

Dans l'exemple des figures, les joints toriques 20 et les gorges annulaires 426 sont concentriques et au nombre de trois. En variante non-représentée, le nombre et/ou la forme des joints toriques 20 et des gorges annulaires 426 sont différents.

Le manchon 64 est prévu pour être engagé dans un logement central L2 du pulvérisateur 2 qui est défini, radialement à l'axe longitudinal A2, entre la partie externe 42 et la partie interne 44 du corps principal 4.

On note 642 le bord arrière du manchon 64, c'est-à-dire le bord de ce manchon opposé au corps de jupe 62. On note 644 l'extrémité du manchon 64 qui est la plus proche du bord arrière 642. Le bord arrière 642 délimite l'extrémité arrière 644 à l'opposé du corps de jupe 62. L'extrémité arrière 644 est opposée à l'extrémité avant 641 du manchon 64.

On note S64 la surface radiale externe du manchon 64. Cette surface radiale externe est pourvue d'une gorge périphérique 646 qui forme un logement en creux sur l'extérieur du manchon 64. On note 646a le bord arrière de la gorge périphérique 646, c'est-à-dire le bord de cette gorge le plus proche de l'extrémité 644 du manchon 64.

On note 647 une nervure périphérique externe du manchon 64 qui sépare la gorge périphérique 646 de l'extrémité 644. On note 647a le bord arrière de cette nervure, c'est-à-dire le bord de cette nervure le plus proche de l'extrémité 644 du manchon 64.

Un système magnéto-pneumatique 100 est prévu dans le logement central L2 pour assurer un accrochage du sous-ensemble 22 sur le corps principal 4, ainsi qu'un serrage de la jupe 6 sur ce corps principal. Le système magnéto-pneumatique 100 comprend un dispositif magnétique d'accrochage 100A et un mécanisme pneumatique de serrage 100B de la jupe d'amenée d'air 6 sur le corps principal 4.

L'accrochage, obtenu grâce au dispositif magnétique d'accrochage 100A, permet d'assurer que la jupe d'amenée d'air 6 équipée du bol 8 reste en position sur le corps principal 4, y compris lorsque celui-ci est déplacé par un robot multiaxe ou un réciprocateur sur lequel est monté le pulvérisateur. Les déplacements du pulvérisateur induisent des accélérations sur la jupe d'amenée d'air 6 et sur le bol 8, qui pourraient avoir pour effet de chasser le manchon 64 hors du logement central L2. L'effort d'accrochage magnétique est dimensionné pour résister à ces accélérations.

L'effort de serrage permet de finaliser le positionnement de la jupe d'amenée d'air 6 sur le corps principal 4 et de comprimer les joints toriques 20, donc d'assurer l'étanchéité du circuit d'alimentation des orifices de sortie 624 en air de conformation du nuage de produit de revêtement.

Le système magnéto-pneumatique 100 s'étend le long d'un axe longitudinal A100 qui est confondu avec l'axe longitudinal A2 du pulvérisateur 2 en configuration montée du système magnéto-pneumatique 100 dans le pulvérisateur 2.

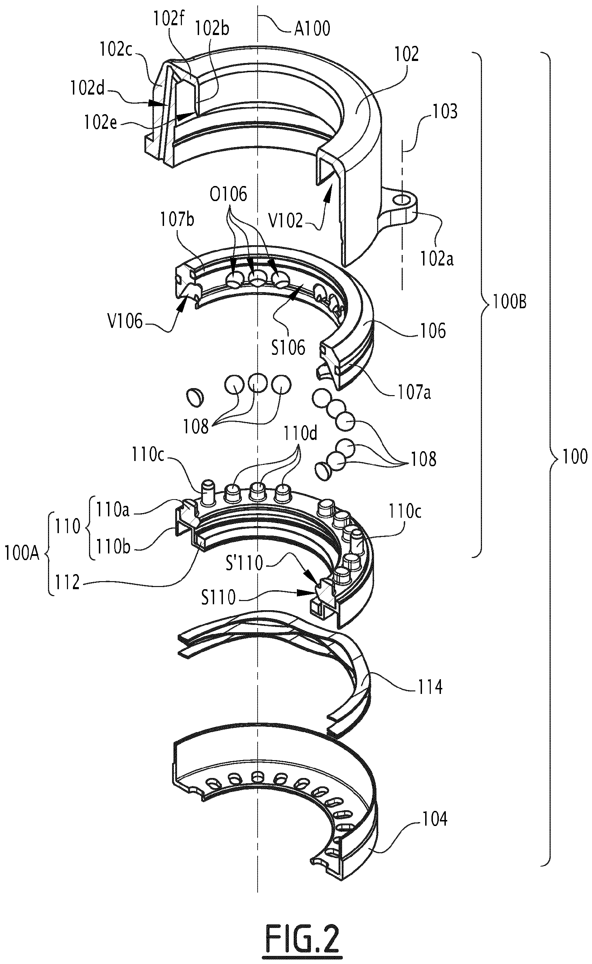

Le système magnéto-pneumatique 100 comprend une coiffe 102 immobilisée sur le corps principal 4 par des vis qui traversent une ou plusieurs pattes 102a prévues sur l'extérieur de la coiffe 102. L'une de ces vis est représentée par son trait d'axe 103 à la figure 2.

La coiffe 102 définit un volume annulaire V102 centré sur l'axe longitudinal A100 et qui est bordé par une paroi radiale interne 102b et une paroi radiale externe 102c.

Un passage 102d est ménagé dans l'épaisseur de la paroi radiale externe 102c et permet de relier fluidiquement un conduit 446 ménagé dans la partie interne 44 du corps principal 4 et le volume V102.

D'autre part, la paroi interne 102b de la coiffe 102 se termine par un bord chanfreiné 102e tourné vers le volume V102 et convergeant vers l'axe longitudinal A100 à l'opposé du fond 102f du volume V102, c'est-à-dire en direction de l'arrière de la coiffe 102.

Le système magnéto-pneumatique 100 comprend également une coupelle 104 posée sur le fond arrière du logement central L2. Dans l'exemple des figures, le fond du logement central L2 est opposé à son embouchure avant et délimité par la partie interne 44.

Le système magnéto-pneumatique 100 comprend également un piston annulaire 106 équipé de deux segments d'étanchéité 107a et 107b. Dans l'exemple, les segments d'étanchéité sont réalisés par deux joints toriques reçus dans deux gorges périphériques 106a et 106b, respectivement externe et interne, ménagées sur le piston 106. Les joints toriques 107a et 107b ne sont pas représentés à la figure 1, ce qui permet de mieux visualiser les gorges 106a et 106b.

En variante, les segments d'étanchéité sont formés par des joints à lèvres. Selon une autre variante, ils sont montés sur les parois de la coiffe 102 en regard du piston 106.

Le piston 106 est mobile, parallèlement aux axes A2 et A100 confondus, en étant partiellement engagé dans le volume V102 de la coiffe 102. Du fait de l'engagement partiel du piston 106 dans le logement V102 et de la portée des segments d'étanchéite107a et 107b contre les parois 102c et 102b, une chambre étanche de volume variable C100 est définie entre les éléments 102 et 106. Cette chambre de volume variable C100 est alimentée en air sous pression provenant du conduit 446 à travers le passage 102d. Des moyens non représentés, tels qu'une source d'air sous pression, une vanne proportionnelle et une vanne de purge permettent d'alimenter la chambre de volume variable C100 en air sous pression ou de la mettre à l'air libre, en fonction d'une séquence de montage ou de démontage de la jupe 2 sur le corps principal 4. La pression de l'air présent dans le conduit 446 est pilotée indépendamment de la pression de l'air d'entrainement du rotor 10 et de la pression de l'air de jupe dans les conduits 442.

En variante, une partie de l'air d'entraînement du rotor 10 peut être déviée vers le conduit 446. Dans ce cas, la chambre de volume variable C100 peut être alimentée en air sous pression dès que la turbine est en fonctionnement. Selon une autre variante, le conduit 446 peut être alimenté en air sous pression à partir d'air utilisé dans le pulvérisateur 2 pour une autre fonction, par exemple à partir de l'air de jupe circulant dans les conduits 442.

Le piston 106 définit également des volumes V106 de réception de billes 108 qui constituent des organes de mise en prise du piston 106 avec la gorge périphérique externe 646 du manchon 64.

Avantageusement, une bille 108 est montée dans chaque volume V106.

Chaque bille 108 est reçue dans un volume V106 dont elle peut dépasser, ou non, à travers une ouverture 0106 qui constitue le débouché de chaque volume V106 sur la surface périphérique interne S106 du piston 106.

Chaque volume V106 est défini, sur son côté opposé à son ouverture 0106, par une surface S106 convergente vers l'avant en direction de l'axe longitudinal A100 et inclinée par rapport à cet axe longitudinal d'un angle αnon nul, de préférence compris entre 15° ou 60°, de préférence encore entre 30° et 50°.

Les surfaces S106 des différents volumes V106 constituent des surfaces de came pour le guidage des billes 108.

Le système magnéto-pneumatique 100 comprend également un support 110 qui est également de forme annulaire centrée sur l'axe longitudinal A100 et qui est formé d'un corps massif 110a et d'un profilé 110b, tous deux réalisés dans un matériau ferromagnétique. Les parties 110a et 110b du support 110 sont solidarisées ensemble par tout moyen approprié, notamment par collage, sertissage et/ou soudage.

En variante, le support 110 est monobloc.

Le support 110 est équipé de pions 110c d'indexage en position, autour de l'axe longitudinal A100, vis-à-vis du piston 106.

Le support 100 est également équipé de butées 110d destinées à s'engager dans les volumes V106 par l'arrière du piston 106, pour maintenir les billes 108 en position dans ces volumes.

Le support 100 porte un aimant permanent annulaire 112 qui est disposé sur le côté radial interne du support 100. Dans l'exemple, l'aimant permanent est solidarisé au profilé 110b, par exemple par collage.

D'autre part, le support 100, plus particulièrement son corps 110a définit une première surface interne tronconique S110, centrée sur l'axe longitudinal A100 et convergente en direction du piston 106, et une deuxième surface interne tronconique S'110, centrée sur l'axe longitudinal A100 et divergente en direction du piston 106.

Le système magnéto-pneumatique 100 comprend également un ressort plan 114 qui forme un organe élastique de renvoi du piston 106, et de préférence du support 110, vers l'avant.

Le ressort plan 114 est formé par une lame en acier. L'utilisation d'un ressort plan tel que celui représenté sur les figures présente l'avantage de permettre une course axiale relativement importante du piston 106, alors que l'encombrement axial du ressort 114 est minimal.

En variante, le ressort plan 114 peut être remplacé par un autre organe élastique, notamment un bloc d'élastomère ou un ressort spiral.

On explique maintenant un procédé de montage pulvérisateur 2.

Dans une première étape, le sous-ensemble 22 est formé en engageant le bol 8 dans l'ouverture centrale O6 de la jupe d'amenée d'air 6, jusqu'à ce que l'aimant 14 et la surface 82 assurent un bridage magnétique entre les éléments 6 et 8. Cette étape peut être réalisée en atelier, dans un environnement propice à un travail précis.

Ensuite, dans une deuxième étape, le sous-ensemble 22 est monté, c'est-à-dire rapporté en une opération, sur le corps principal 4, comme expliqué ci-après. Cette étape peut avoir lieu sur le site d'utilisation du pulvérisateur 2, par exemple une cabine de peinturage.

Ce montage a lieu par un mouvement de translation axiale du sous-ensemble 22, parallèle à l'axe longitudinal A2. Ce mouvement de translation axiale est représenté par la flèche T aux figures 1 et 3 à 6. Aucun autre mouvement de la jupe d'amenée d'air 6, donc du sous-ensemble 22, n'est nécessaire pour les monter sur le corps principal 4.

Ainsi, le montage du sous-ensemble 22 sur le corps principal 4 résulte exclusivement d'un mouvement relatif de translation entre ces éléments du pulvérisateur 2.

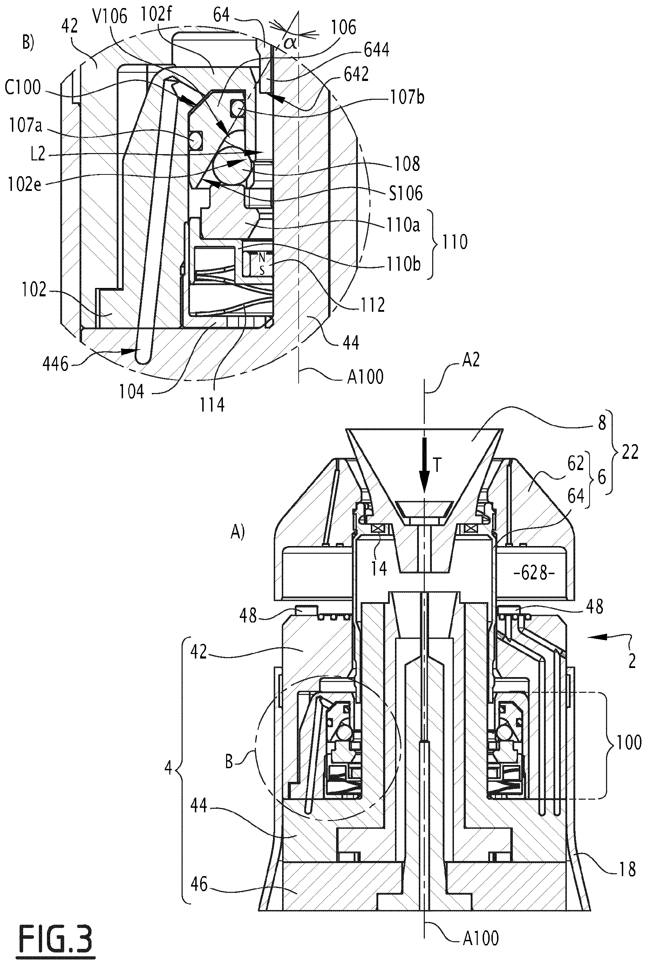

Dans une première sous-étape de la deuxième étape représentée à la figure 3, le sous-ensemble 22 est aligné sur l'axe A2 et rapproché du corps principal 4. Dans cette étape, l'extrémité arrière 644 du manchon 64 est engagée dans le logement central L2, sans être en contact avec les composants du système magnéto-pneumatique 100.

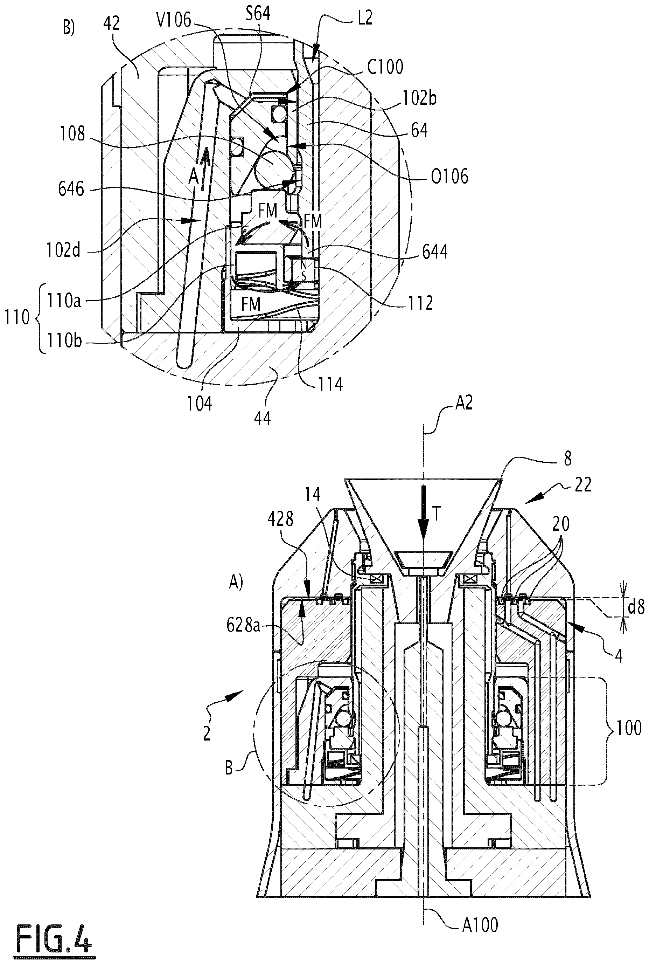

La poursuite du montage du sous-ensemble 22 sur le corps principal 4 amène le manchon 64 à la sous-étape représentée à la figure 4, où son extrémité arrière 644 est en appui par son bord 642 contre l'aimant permanent 112, alors que le bord 647a est en appui contre la surface S'110, ce qui évite une déformation plastique de l'extrémité 644 en fin de course.

Dans cette sous-étape, un flux magnétique fermé FM est établi à travers l'extrémité arrière 644 du manchon 64, à travers les parties 110a et 110b du support 110 et à travers l'aimant 112, ce qui a pour effet de solidariser, par un effort magnétique axial d'attraction, la jupe d'amenée d'air 6 avec le support 110, lequel est retenu en position dans le logement central L2 puisqu'il est limité dans ses mouvements entre la coiffe 102 et la coupelle 104. Ainsi, l'ensemble du sous-ensemble 22 est solidarisé avec le support 110. L'effort magnétique axial d'attraction entre les pièces 12 et 64 est parallèle à l'axe longitudinal A2, de préférence centré sur cet axe, et résulte dans un accrochage de la jupe d'amenée d'air 6, donc du sous-ensemble 22, sur le corps principal. Cet effort est donc un effort d'accrochage de ces pièces ensemble.

L'aimant permanent 112 est choisi pour exercer sur le manchon 64 un effort magnétique d'accrochage d'intensité suffisante pour retenir en position le sous-ensemble 22 sur le corps principal 4, y compris lorsque celui-ci est déplacé, par exemple lorsqu'il est monté sur le poignet du bras d'un robot multiaxe ou sur un réciprocateur, ce qui soumet le sous-ensemble 22 à ces accélérations potentiellement dirigées dans un sens d'extraction du manchon 64 par rapport au logement central L2.

En pratique, l'effort magnétique d'accrochage exercé par l'amant permanent sur le manchon a une intensité I1 comprise entre 10 et 20 daN, de préférence de l'ordre de 15 daN, ce qui permet un accrochage efficace de la jupe d'amenée d'air 6, donc du sous-ensemble 22, sur le corps principal 4. D'autre part, la valeur relativement modérée de cette intensité I1 de l'effort magnétique d'accrochage limite les risques de blessure par pincement d'un opérateur lorsque celui-ci présente le sous-ensemble 22 et engage le manchon 64 dans le logement central L2.

Dans la sous-étape de la figure 4, le sous-ensemble 22 est accroché sur le corps principal 4 grâce à l'effort magnétique, mais le fond 628a du logement en creux 628 reste écarté de la face avant 428 de la partie externe 42, d'une distance axiale d8 non nulle, cette distance d8 étant mesurée parallèlement à l'axe longitudinal A2. En particulier, dans cette sous-étape, les joints 20 ne sont pas comprimés et l'étanchéité entre les circuits d'air, formés par les conduits 422 et 622 et les gorges 628c et 628d, n'est pas assurée vis-à-vis de l'extérieur.

Dans les étapes et sous-étapes des figures 1, 3 et 4, le ressort 114 exerce sur le support 110 un effort d'éloignement par rapport à la coupelle 104, ce qui a pour effet d'engager les butées 110d dans les différents volumes V106, au point que ces butées 110d appuient sur les billes 108 qui appuient elles-mêmes sur les surfaces de came S106 du piston 106, ce qui a pour effet de repousser celui-ci vers le fond 102f du volume V102. La chambre de volume variable C100 a alors un volume minimum visible notamment à l'insert B) de la figure 3.

Dans cette position, chaque bille 108 est en appui contre le bord chanfreiné 102e de la coiffe 102, de sorte qu'elle est retenue en position dans le volume V106 correspondant sans faire saillie radialement de la paroi 102b, selon une direction radiale à l'axe longitudinal A100 et centripète. Dans ces conditions, les billes 108 ne s'opposent pas au coulissement du manchon 64 dans le logement central L2, notamment lors de la succession des étapes des figures1, 3 et 4. En particulier, dans la sous-étape de la figure 4, les billes 108 ne sont pas engagées dans la gorge périphérique externe 646.

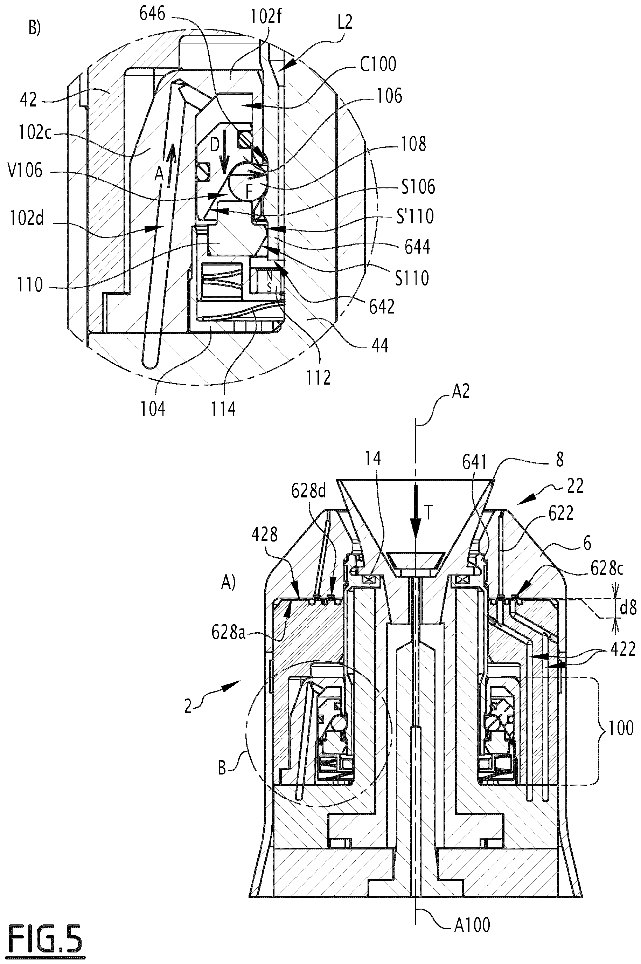

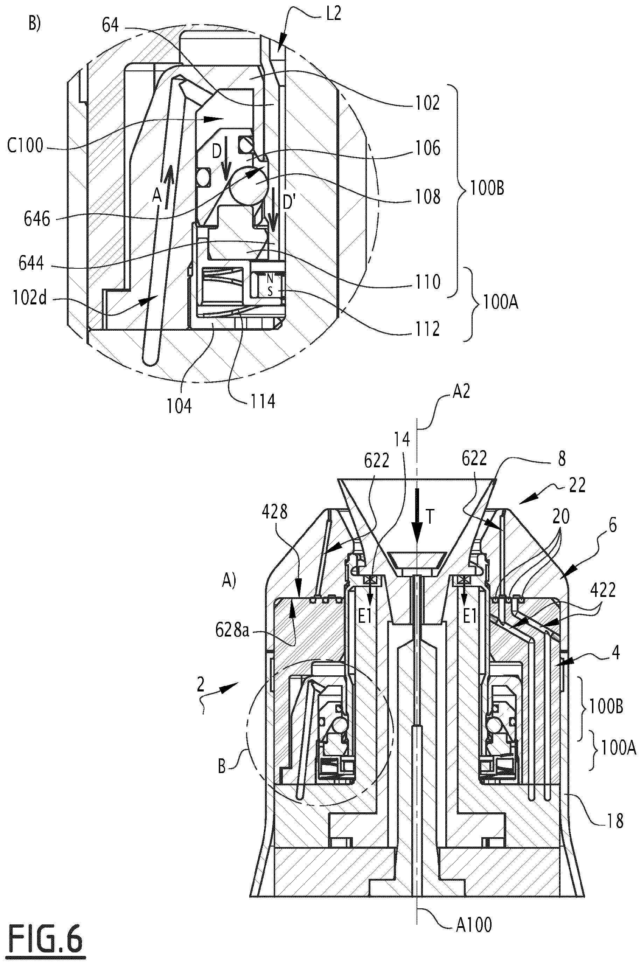

À partir de la sous-étape de la figure 4, le passage 102d est alimenté en air sous pression, ce que représente la flèche A aux figures 4 à 6. Ceci a pour effet de mettre sous pression la chambre de volume variable C100, laquelle s'expand, c'est-à-dire se dilate, en direction de la coupelle 104, comme cela ressort de la comparaison des figures 4 et 5. Cette expansion axiale de la chambre C100 résulte d'un déplacement axial, parallèle à l'axe longitudinal A2, du piston 106 en direction de la coupelle 104, représenté par la flèche D aux figures 5 et 6, ce déplacement étant dû à la différence entre la pression régnant à l'intérieur de la chambre de volume variable C100 et la pression atmosphérique externe.

Ce déplacement D du piston 106 a pour effet de déplacer en direction de la coupelle 104, donc du fond du logement central L2, les différentes billes 108 qui deviennent alors décalées par rapport au bord chanfreiné 102e de la paroi 102b, ce bord ne s'opposant alors plus à un mouvement radial centripète des billes 108 à travers les ouvertures 0106. Or, compte tenu du caractère incliné des surfaces de came S106 des différents volumes V106, le déplacement du piston 106 en direction de la coupelle 104 a pour effet d'exercer sur les différentes billes 108 un effort centripète par rapport à l'axe longitudinal A2, représenté par la flèche F à la figure 5 et dirigé vers la gorge périphérique externe 646. Ainsi, l'alimentation en air de la chambre C100 permet de resserrer différentes billes 108 autour du manchon 64, en les engageant, c'est-à-dire en les faisant pénétrer en partie au moins, dans la gorge périphérique externe 646. Les billes 108 constituent donc des organes de mise en prise du piston 106 avec le relief externe du manchon 64 constitué par la gorge périphérique 646.

Lors de la succession des sous-étapes des figures 4 et 5, les billes 108 repoussent le support 110 en direction de la coupelle 104, à l'encontre de l'effort élastique exercé par le ressort 114, ce qui a pour effet de séparer axialement le ressort 112 et l'extrémité 644 du manchon 64. En d'autres termes, dans la sous-étape de la figure 5, le bord arrière 642 du manchon 64 n'est plus en appui contre l'aimant 112 et le bord 647a n'est plus en appui contre la surface S'110. Ceci n'est pas gênant puisque les billes 108 engagées dans la gorge périphérique externe 646 retiennent alors efficacement le manchon 64 dans le logement central L2.

Au terme de la sous-étape de la figure 5, la valeur de la distance d8 a décru par rapport à sa valeur dans la sous-étape de la figure 4, mais cette valeur demeure non nulle.

La poursuite de l'alimentation de la chambre de volume variable C100 en air sous pression à travers le passage 102d a pour effet la poursuite du déplacement du piston 106 en direction de la coupelle 104, à l'encontre de l'effort élastique exercé par le ressort 114, dans le sens de la flèche D à la figure 6. Lors de ce déplacement, les billes 108 viennent en appui contre le bord arrière 646a de la gorge périphérique externe 646 et transmettent au manchon 64 l'effort de déplacement qu'elles subissent du fait du mouvement du piston 106 dans le sens de la flèche D. Ainsi, le manchon 64 est déplacé en même temps et sur la même course que le piston 106, en direction du fond du logement central L2, ce que représente la flèche de déplacement D' à la figure 6.

Ce déplacement D' du manchon 64 à l'intérieur du logement central L2 a pour effet de plaquer fermement le fond 628a du logement en creux 628 contre la face avant 428 de la partie externe 42 du corps 4 en comprimant les joints 20, ce qui isole fluidiquement les conduits 422 et 622 et les gorges 628c et 628d de l'extérieur. En d'autres termes, le mécanisme pneumatique 100B exerce, sur le manchon 64 et au moyens des billes 108, un effort mécanique axial de serrage, parallèle à l'axe longitudinal A2, qui plaque fermement le fond 628a du logement en creux 328 de la jupe d'amenée d'air 6 contre la face avant 428.

Ainsi, la mise en place et l'immobilisation du sous-ensemble 22 sur le corps principal 4 est effectuée en deux temps grâce au système magnéto-pneumatique 100. Le mécanisme pneumatique 100B est donc également un mécanisme de verrouillage du sous-ensemble 22 sur le corps principal 4.

Au terme de cette mise en place, le bol 8, qui est solidaire de la jupe d'amenée d'air 6 du fait de l'interaction des premiers et deuxièmes moyens de couplage 82 et 14, est plaqué, par un effort magnétique E1 parallèle à l'axe de rotation A2 et exercé par ces moyens de couplage, contre le rotor 10, au point que les efforts de friction entre les surfaces 88 et 108 solidarisent le bol et le rotor en rotation autour de l'axe de rotation A2.

Ici, l'effort E1 est purement axial par rapport à l'axe de rotation A2. En variante non-représentée de l'invention, l'effort E1 est partiellement axial par rapport à cet axe de rotation, c'est-à-dire incliné par rapport à celui-ci, comme envisagé dans WO2005/082542A.

Comme le bol 8 est correctement positionné sur la jupe d'amenée d'air 6 du fait de la coopération des moyens de couplage magnétique 82 et 14, le fait d'amener le sous-ensemble 22 dans la position de la figure 6 garantit que, dans cette position, le bol est correctement positionné par rapport au rotor 10, notamment au niveau de l'interface entre les surfaces 88 et 108. Le bol 8 est alors prêt à être entraîné par le rotor 10.

Lorsque la turbine fonctionne, c'est-à-dire lorsque le rotor 10 tourne autour de l'axe de rotation A2, un palier à air est créé entre la surface 82 et l'aimant 14 en injectant un flux d'air entre ces parties, selon la technique de WO2005/082542A1. Le rotor 10 peut ainsi entraîner en rotation le bol 8, autour de l'axe de rotation A2.

Le dispositif mécanique d'accrochage 100A, qui comprend les éléments 110 et 112, permet de retenir en position le sous-ensemble 22 sur le corps 2 avant que le mécanisme pneumatique de serrage 100B, qui comprend les éléments 102, 106, 108 et 110, soit utilisé en alimentant la chambre de volume variable C100 en air sous pression pour serrer effectivement la jupe d'amenée d'air 6, donc le sous-ensemble 22, en place sur le corps principal 4, en particulier en comprimant les joints 20. La coupelle 104 et le ressort 114 sont des accessoires du dispositif mécanique d'accrochage 100A et du mécanisme pneumatique de serrage 100B au sein du système magnéto-pneumatique 100.

L'effort mécanique de serrage obtenu au moyen du mécanisme pneumatique de serrage 100B a une intensité I2 strictement supérieure à l'intensité de l'effort magnétique mentionné ci-dessus.

Par exemple, l'effort mécanique obtenu avec le mécanisme pneumatique de serrage 100B peut avoir une intensité comprise entre 80 et 200 daN, de préférence entre 100 et 150 daN, de préférence encore l'ordre de 120 daN.

Lorsqu'il convient de démonter le sous-ensemble 22 par rapport au corps principal 4, l'alimentation de la chambre de volume variable C100 en air sous pression est arrêtée et le passage 102d est mis à l'air libre. Le ressort 114 repousse alors le support 110, les billes 108 et le piston 106 vers le fond 102f du volume V102, en réduisant le volume de la chambre de volume variable C100.

Les billes 108 viennent alors en butée contre le bord chanfreiné 102e de la paroi 102b, ce qui a pour effet de les renvoyer vers l'intérieur des volumes V106, en les extrayant de la gorge périphérique externe 646. En d'autres termes, les billes 108 ne sont plus en prise avec la gorge périphérique externe 646. Ainsi, l'effort élastique exercé par le ressort 114 tend à renvoyer le piston vers une position dans laquelle billes 108 peuvent être dégagées de la gorge périphérique externe 646 du manchon 64.

En étant repoussé par le ressort 114, le support 110 entraine avec lui l'aimant 112 qui vient au contact du bord arrière 642 du manchon 64, ce qui a pour effet de réactiver l'effort magnétique d'accrochage entre le manchon 64 et l'aimant 112. Le système magnéto-pneumatique 100 est alors dans une configuration analogue à celle de la figure 4 où les joints 20 ne sont plus comprimés et où le sous-ensemble 22 demeure accroché sur le corps principal 4 par l'effort magnétique résultant du flux magnétique FM représenté par les flèches F. Le sous-ensemble 22 est retenu de façon fiable sur le corps principal 4, pour les raisons expliquées ci-dessus.

Il est alors possible d'extraire le sous-ensemble 22 lors d'une première étape de démontage, en exerçant un effort axial dans un sens inverse à celui de la flèche T sur les figures 1 et 3 à 6.

À cet égard, il est possible d'utiliser pour ce faire un outil de démontage non représenté.

Ensuite, lors d'une deuxième étape de démontage, le bol 8 est séparé de la jupe d'amenée d'air 6, à l'encontre de l'effort magnétique entre l'aimant 14 et la surface 82. Comme la première étape du procédé de montage, cette deuxième étape du procédé de démontage peut être réalisée en atelier, dans un environnement propice à un travail précis.

La structure du sous-ensemble 22 et du système magnéto-pneumatique 100 de l'invention est compatible avec une mise en place du sous-ensemble 22 sur le corps principal 4 au moyen d'un robot, ainsi qu'à son retrait au moyen d'un robot. Ainsi, selon un aspect particulier, la présente invention permet d'automatiser le montage et le démontage d'une jupe d'amenée d'air et d'un bol sur le corps principal d'un pulvérisateur.

La chambre de volume variable C100 du système magnéto-pneumatique 100 peut, en variante, être alimentée avec un gaz sous pression différent de l'air.

Selon une variante non-représentée de l'invention, la chambre de volume variable C100 du système 100 peut être alimentée en liquide, notamment en eau, pour piloter le déplacement D du piston 106. Dans ce cas, le système 100 est un système magnéto-hydraulique.

Selon une autre variante, lors de la sous-étape de la figure 4, le bord 642 du manchon 64 vient en appui contre le support 110 et non pas contre l'aimant 112. Ceci permet également de créer un flux magnétique fermé du type du flux magnétique fermé FM représenté à la figure 4.

Le système magnéto-pneumatique 100 peut être utilisé de façon automatique, en se servant de l'effort magnétique généré par l'aimant permanent 114 et en pilotant l'arrivée d'air sous pression dans la chambre de volume variable C100 ou son évacuation au moyen de vannes pilotées par une unité électronique de contrôle non-représentée. Ainsi le fonctionnement du système magnéto-pneumatique 100 lors du montage ou du démontage du sous-ensemble 22 peut-il être automatisé, ce qui soulage un opérateur travaillant à proximité du pulvérisateur 2 et rend son travail moins dangereux.

En variante non-représentée de l'invention, les joints toriques 20 sont montés dans des gorges ménagées sur le fond 628a du logement en creux 628 et/ou des gorges équivalentes aux gorges 628c et 628d sont prévues sur la face avant 428 de la partie externe 42 du corps principal 4.

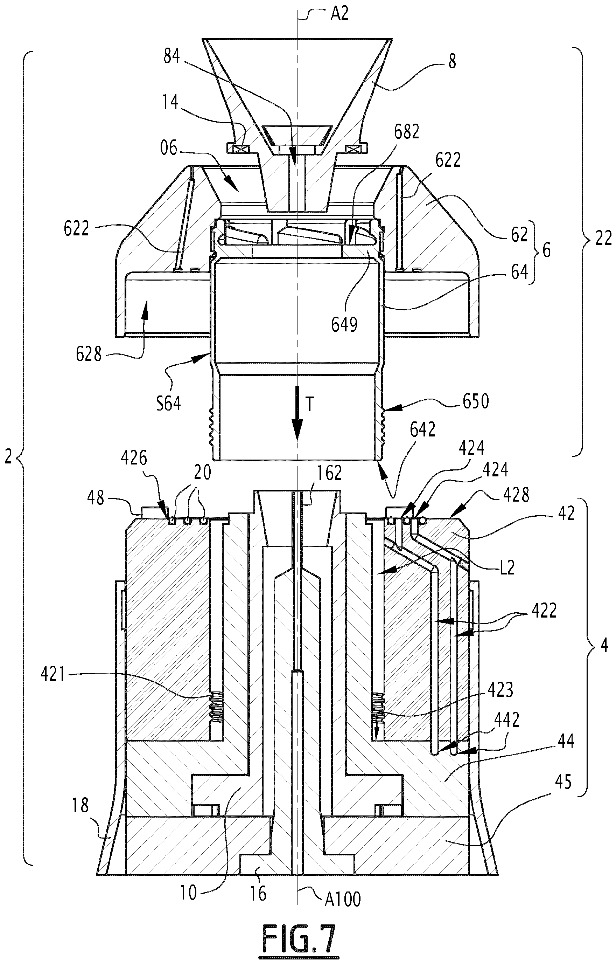

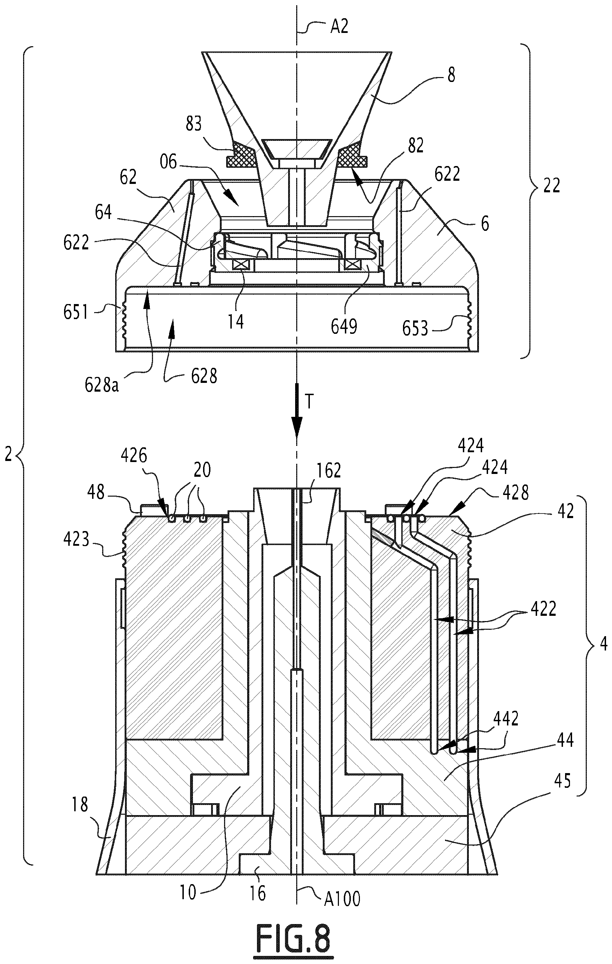

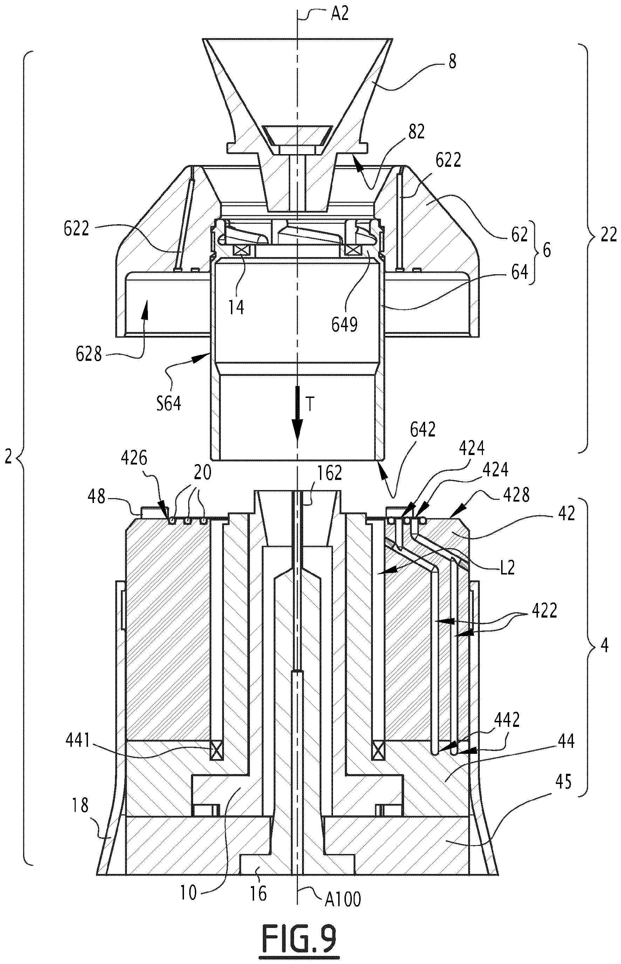

Dans les deuxième, troisième et quatrième modes de réalisation de l'invention représentés aux figures 7 à 9, les éléments analogues à ceux du premier mode de réalisation portent les mêmes références. Dans ce qui suit, si une référence est utilisée dans la description sans être portée sur l'une des figures 7 à 9 ou si une référence est portée sur l'une de ces figures sans être mentionnée dans la description, elle concerne le même élément que celui portant la même référence dans le premier mode de réalisation.

Dans les deuxième, troisième et quatrième modes de réalisation, il n'est pas prévu de système magnéto-pneumatique ou magnéto-hydraulique, du type du système 100 du premier mode de réalisation.

Dans le deuxième mode de réalisation, l'aimant permanent 14 est monté sur le bol 8, alors qu'une surface avant annulaire 682 de la collerette 649, qui est réalisée en matériau ferromagnétique, est disposée en regard de l'aimant 14 en configuration montée d'un sous-ensemble 22 défini comme dans le premier mode de réalisation. L'aimant 14 et la surface 682 de la collerette 649 constituent des premiers et seconds moyens de couplage magnétique entre les pièces 6 et 8.

Le manchon 64 de la jupe d'amenée d'air 6 est pourvu, sur sa surface radiale externe 64, d'un filetage 650, alors que la partie externe 42 du corps principal 4 est pourvue, dans le logement L2, d'un taraudage 421 complémentaire du filetage 650. Ainsi, une fois constitué, le sous-ensemble 22 peut être vissé sur le corps principal 4 lors du montage de la jupe d'amenée d'air 6 et du bol 8 sur le pulvérisateur 2, en utilisant le filetage 650 et le taraudage 421, jusqu'à amener le bord arrière du manchon en appui contre le fond 423 du logement L2 ou le fond 628a du logement en creux 628 en appui contre la face avant 428.

A l'inverse, lors du démontage, le sous-ensemble 22 est retiré en le dévissant.

Dans le troisième mode de réalisation, l'aimant permanent 14 est positionné sur la collerette 649 comme dans le premier mode de réalisation. La surface 82 est formée par une bague 83 en matériau ferromagnétique rapportée sur le bol 8 qui n'est pas forcément en matériau ferromagnétique et qui est, par exemple, en aluminium.

Ici, le manchon 64 de la jupe d'amenée d'air 6 comprend principalement la collerette 649, mais pas de partie qui s'étend dans le logement en creux 628. Une jupe 651 qui entoure le logement en creux 628 est pourvue, sur sa surface radiale interne, d'un taraudage 653, alors que la partie externe 42 du corps principal 4 est pourvue, sur sa surface radiale externe, d'un filetage 423. Ainsi, une fois constitué, le sous-ensemble 22 peut être vissé sur le corps principal 4 lors du montage de la jupe d'amenée d'air 6 et du bol 8 sur le pulvérisateur 2, en utilisant le filetage 423 et le taraudage 653, jusqu'à amener le fond 628a du logement en creux 628 en appui contre la face avant 428.

A l'inverse, lors du démontage, le sous-ensemble 22 est retiré en le dévissant.

Dans le quatrième mode de réalisation, la surface 82 du bol 8 est monobloc avec le reste du bol et l'aimant permanent 14 est positionné sur la collerette 649 comme dans le premier mode de réalisation.

Ici, un aimant permanent 441 est logé au fond du logement L2 et coopère avec le bord arrière 642 du manchon 64 pour exercer, sur le sous-ensemble 22 défini comme dans le premier mode de réalisation, un effort de bridage magnétique sur le corps principal 4.

En variante de ce quatrième mode de réalisation, l'aimant 441 peut être monté sur l'arrière du manchon 64 et coopérer avec le rotor qui est alors au moins en partie en matériau ferromagnétique.

Dans les deuxième, troisième et quatrième modes de réalisation, le montage du pulvérisateur 2 a lieu en deux étape, comme dans le premier mode de réalisation. Dans une première étape de montage, la jupe d'amenée d'air 6 et le bol 8 sont assemblés et maintenus ensemble par l'effort magnétique entre l'aimant 14 et la surface 82 ou 682, de sorte à constituer le sous-ensemble 22. Dans une deuxième étape de montage, le sous-ensemble 22 est rapporté en une opération sur le corps principal (4). Lors du démonatge, dans une première étape, le sous-ensemble 22 est séparé du corps principal en une opération. Puis, dans une deuxième étape de démontage, la jupe d'amenée d'air 6 et le bol 8 sont séparés l'un de l'autre, à l'encontre de l'effort magnétique entre l'aimant 14 et la surface 82 ou 682.

En variante et quel que soit le mode de réalisation, pulvérisateur 2 est de type électrostatique à charge externe et comprend une unité haute-tension et des électrodes de charge non-représentées, configurées pour porter à un potentiel électrique donné le produit de revêtement pulvérisé par le pulvérisateur 2.

Selon une autre variante applicable à tous les modes de réalisation, le pulvérisateur n'est pas de type électrostatique.

En variante, au lieu d'un aimant permanent annulaire unique 14, plusieurs aimants permanents répartis autour de l'axe de rotation peuvent être utilisés en tant que moyens de couplage magnétique.

En variante, la surface 108 n'est pas réalisée directement sur le rotor 10 mais sur un autre organe tournant, par exemple un arbre creux entraîné par le rotor.

L'invention est décrite ci-dessus dans le cadre de son utilisation pour la projection de produit de revêtement liquide. Elle s'applique également à la projection de produit de revêtement pulvérulent.

Pour autant que techniquement possible, les modes de réalisation et variantes mentionnés ci-dessus peuvent être combinés.

## Revendications

1. Pulvérisateur rotatif de produit de revêtement (2) comprenant un corps principal (4) et un bol (8) entraîné en rotation par un organe tournant (10), autour d'un axe de rotation (A2) défini par le corps principal, le bol étant équipé de premiers moyens (82 ; 14) de couplage magnétique aptes à coopérer avec des seconds moyens (14 ; 682) de couplage magnétique complémentaires fixés sur une partie non rotative (6) du pulvérisateur de produit de revêtement (2), les premiers et seconds moyens de couplage étant aptes à exercer un effort (E1) au moins partiellement axial par rapport à l'axe de rotation (A2) du bol (8), cet effort induisant le couplage en rotation du bol (8) avec l'organe tournant, **caractérisé en ce que** les seconds moyens de couplage magnétique (14, 682) sont portés par une jupe d'amenée d'air (6) rapportée sur le corps principal (4).

2. Pulvérisateur selon la revendication 1, **caractérisé en ce que** les seconds moyens (14 ; 682) de couplage magnétique sont montés sur, ou formés par, une collerette interne (649) de la jupe d'amenée d'air (6), en appui sur une face avant (428) du corps principal (4).

3. Pulvérisateur selon l'une des revendications précédentes, **caractérisé en ce que** les premiers moyens (82) de couplage magnétique sont formés par une partie ferromagnétique (82 ; 83) du bol et les seconds moyens de couplage magnétique sont formés par au moins un aimant permanent (14).

4. Pulvérisateur selon la revendication 1 ou 2, **caractérisé en ce que** les premiers moyens de couplage magnétique sont formés par au moins un aimant permanent (14) et les seconds moyens de couplage magnétique sont formés par une partie ferromagnétique (682) de la jupe d'amenée d'air (6).

5. Pulvérisateur selon l'une des revendications précédentes, **caractérisé en ce qu'**il comprend un système magnéto-pneumatique ou magnéto-hydraulique (100) qui inclut
- un dispositif magnétique (100A) d'accrochage de la jupe d'amenée d'air (6) sur le corps principal (4) ; et
- un mécanisme pneumatique ou hydraulique (100B) de verrouillage et de serrage de la jupe d'amenée d'air sur le corps principal.

6. Pulvérisateur de produit de revêtement selon la revendication 5, **caractérisé en ce que** le dispositif magnétique d'accrochage (100A) est configuré pour exercer, entre la jupe d'amenée d'air (6) et le corps principal (4), un effort magnétique axial, parallèle à un axe longitudinal (A2) du pulvérisateur, avec une première intensité (11), **en ce que** le mécanisme pneumatique ou hydraulique de serrage (100B) est configuré pour exercer entre la jupe d'amenée d'air et le corps principal un effort mécanique axial, parallèle à l'axe longitudinal du pulvérisateur, avec une deuxième intensité (12) et **en ce que** la deuxième intensité est strictement supérieure à la première intensité.

7. Pulvérisateur de produit de revêtement selon la revendication 6, **caractérisé en ce qu'**il comprend des joints d'étanchéité (20) disposés entre la jupe d'amenée d'air (6) et le corps principal (4) et **en ce que** les joints d'étanchéité comprimés par l'effort mécanique exercé par le mécanisme pneumatique ou hydraulique de serrage (100B) isolent des conduits (422, 622) de circulation d'air de conformation ménagés dans le corps principal (4) et dans un corps (62) de la jupe d'amenée d'air (6), vis-à-vis de l'extérieur du pulvérisateur (2).

8. Pulvérisateur de produit de revêtement selon l'une des revendications 1 à 4, **caractérisé en ce que** la jupe d'amenée d'air (6) est pourvue de reliefs (650, 653) de vissage sur des reliefs complémentaires (421, 423) ménagés sur le corps principal (4).

9. Pulvérisateur de produit de revêtement selon l'une des revendications 1 à 4, **caractérisé en ce que** la jupe d'amenée d'air (6) est bridée sur le corps principal par un effort magnétique exercé entre une partie (441) du corps principal (44) et une partie (642) de la jupe d'amenée d'air.

10. Procédé de montage et/ou de démontage d'un pulvérisateur de produit de revêtement selon l'une des revendications précédentes, dans lequel
- lors du montage du pulvérisateur,
• dans une première étape de montage, la jupe d'amenée d'air (6) et le bol (8) sont assemblés et maintenus ensemble par un effort magnétique entre les premiers et deuxièmes moyens de couplage magnétique (14, 82 ; 14, 682) ;
• dans une deuxième étape de montage, un sous-ensemble (22) formé de la jupe d'amenée d'air (6) et le bol (8) est rapporté en une opération sur le corps principal (4) ;
- lors du démontage du pulvérisateur,
• dans une première étape de démontage, le sous-ensemble (22) formé de la jupe d'amenée d'air (6) et du bol (8) est séparé du corps principal en une opération ; et
• dans une deuxième étape de démontage, la jupe d'amenée d'air (6) et le bol (8) sont séparés l'un de l'autre, à l'encontre de l'effort magnétique entre les premiers et deuxièmes moyens de couplage magnétique (14, 82 ; 14, 682).
